# EUROPÄISCHE PATENTANMELDUNG

(11) **EP 1 120 322 A2**
(43) Veröffentlichungstag der Anmeldung: **01.08.2001**
(21) Anmeldenummer: 01101416.4
(22) Anmeldetag: 23.01.2001
(51) Int. Cl.: B60S 13/02, E04H 6/40

(54) **Drehscheibe**

(30) Priorität: 27.01.2000 DE 10003413
(71) Anmelder: Ingenieurbüro Ganser GmbH, 88353 Kisslegg-Waltershofen (DE)
(72) Erfinder: Kuisle, Harald, 88167 Gestratz (DE); Ganser, Anton, 88353 Kisslegg-Waltershofen (DE)
(74) Vertreter: Riebling, Peter, Dr.-Ing.

(57) **Zusammenfassung**

Die Erfindung betrifft eine Drehscheibe mit einer Unterkonstruktion und einem auf der Unterkonstruktion mittels Trag- und Antriebselementen drehbar gelagerten Drehteller und zeichnet sich dadurch aus, dass der Drehteller als mehrlagige, verformungssteife Sandwichkonstruktion ausgebildet ist und die Trag- und Antriebselemente versenkt und/oder verschachtelt in der Unterkonstruktion aufgenommen sind. Dies ermöglicht eine relativ leichte Konstruktion der Drehscheibe mit geringer Bauhöhe.

## Beschreibung

Die Erfindung betrifft eine Drehscheibe für verschiedene Einsatzzwecke, z.B. für EMV-Meßlabors, Präsentationen von Produkten und Fahrzeugen und dergleichen, gemäß den im Oberbegriff des unabhängigen Patentanspruchs angegebenen Merkmalen.

Es sind Drehscheiben, Drehteller, Drehvorrichtungen etc. für diverse Einsatzzwecke mit verschiedenen Konstruktionsmerkmalen bekannt. Z.B. zeigt die WO-A-98/30424 eine Drehscheibe für Fahrzeuge, welche eine Basisplatte und eine gegenüber dieser drehbare Deckplatte aufweist, wobei die Deckplatte zentral und über am Außenumfang angeordnete Stützlager auf der Basisplatte gelagert ist. Die Platten sowie die Lager sind aus Stahl gefertigt. Das bedeutet, dass Platten größeren Durchmessers sehr schwer und problematisch zu transportieren sind. Ferner weist diese bekannte Konstruktion eine relativ große Bauhöhe auf, was für bestimme Einsatzzwecke unvorteilhaft ist.

Die Aufgabe der vorliegenden Erfindung liegt darin, eine Drehscheibe bekannter Art derart weiterzubilden, dass sie eine geringe Bauhöhe und ein relativ zur Baugröße geringes Eigengewicht aufweist. Ferner soll die Konstruktion einfach in der Herstellung und leicht zu transportieren sein.

Die gestellte Aufgabe wird erfindungsgemäß durch die kennzeichnenden Merkmale des unabhängigen Patentanspruchs gelöst.

Im wesentlichen zeichnet sich die Erfindung dadurch aus, dass der Drehteller als mehrlagige, verformungssteife Sandwichkonstruktion ausgebildet ist und die Trag-und Antriebselemente versenkt und/oder verschachtelt in der Unterkonstruktion aufgenommen sind.

Durch die Sandwichbauweise von Drehteller und gegebenenfalls auch der Unterkonstruktion ergibt sich eine verformungssteife, kostengünstige Konstruktion mit niedriger Bauhöhe. Die Mittellage des Sandwichaufbaus besteht aus leichtem Werkstoff, z. B. Holz, und wird mit Decklagen aus z. B. Stahl durch verkleben und/oder verschrauben verbunden. Die Einzelteile lassen sich kostengünstig mit beliebigen Geometrien auf CNC-Bearbeitungsmaschinen herstellen. Es ergibt sich somit eine stabile, flächige Konstruktion. Die verformungssteife Sandwichkonstruktion ermöglicht hohe Belastungen. Auch das Aufbringen spröder, brüchiger Beläge, z. B. Fliesen, Sinterferrite, wird begünstigt. Durch die flächige Konstruktion des Drehtellers besteht die Möglichkeit der Anordnung von Tragrollenkreisen auf beliebigen Durchmessern.

Durch die verschachtelte Anordnung der Trag- und Antriebselemente und das Versenken dieser Elemente in der Unterkonstruktion wird eine extrem flache Bauweise der Drehscheibe ermöglicht, bei der die Verlusthöhe sich im wesentlichen auf die Dicke des Drehtellers reduziert. Durch die erzielte geringe Bauhöhe kann die Drehscheibe ohne bauliche Anpassungen vor Ort, z.B. in einer Grube oder Antriebsaussparung, aufgestellt werden und z. B. über eine kleine Rampe befahren werden. Unebenheiten der Stellfläche können durch Stellschrauben ausgeglichen werden.

Bei kleineren Drehscheiben besteht die Unterkonstruktion aus einer flachen, einteiligen Scheibe und ist bevorzugt als verformungssteife SandwichKonstruktion ausgeführt.
Bei größeren Drehscheiben ist die Unterkonstruktion bevorzugt spinnennetzartig aufgebaut und umfasst konzentrisch angeordnete Kreisringsegmente, die über radial verlaufende Leisten miteinander verbunden sind.
Die Unterkonstruktion dient zur verschachtelten Aufnahme der Trag- und Antriebselemente auf unterschiedlichen Durchmessern und weist hierfür Ausnehmungen und Drehdurchführungen für Strom, flüssige oder sonstige Medien auf.
Dabei werden die Trag- und Antriebselemente bevorzugt über Stecklager in der Unterkonstruktion fixiert, was eine schnelle werkzeuglose Montage ermöglicht.

Insbesondere bei Drehscheiben größeren Durchmessers ist erfindungsgemäß vorgesehen, dass der Drehteller aus einzelnen Kreisausschnitten zusammengesetzt ist. Dies erleichtert die Herstellung, da nur relativ kleine Kreisausschnitte anstelle einer einteiligen Scheibe großen Durchmessers gefertigt werden müssen. Ferner wird der Transport und die Montage vereinfacht.
De Kreisausschnitte werden vorteilhaft durch ein spezielles Verbindungssystem fest aber lösbar miteinander verbunden, wobei jeweils zwei benachbarte Kreisausschnitte durch jeweils eine Gewindeleiste und zwei mit der Gewindeleiste verbindbare Verbindungsleisten formschlüssig und biegesteif miteinander verbunden sind.
Durch die Aufteilung des Drehtellers in einzelne Kreisausschnitte und die biegesteife Verbindung der Einzelteile von Drehteller und Unterkonstruktion sind nahezu beliebige Größen der Drehscheibe realisierbar.

Bevorzugt ist der Drehteller im Zentrum über eine Kugeldrehverbindung auf der Unterkonstruktion gelagert. Die Kugeldrehverbindung dient zur zentrischen Führung des Drehtellers, zur Aufnahme der vertikalen Last, sowie zur Aufnahme des Lastmomentes bei Verzicht auf zusätzliche Tragrollen. Alternativ zu der Kugeldrehverbindung können auch um das Zentrum in die Unterkonstruktion eingesetzte Tragrollen und zusätzliche Radialführungsrollen vorgesehen sein.

Der Drehteller weist im Bereich der Kugeldrehverbindung vorzugsweise eine zentrale Öffnung zur Durchführung von Strom sowie flüssigen oder gasförmigen Medien auf. Damit ist eine Unterbringung von Drehdurchführungen für beliebige Medien möglich.

Der flache Drehteller ist ebenfalls mit verschließbaren Aussparungen für Drehdurchführungen und für den Zugang zu den Trag- und Antriebselementen versehen.

In einer anderen Ausgestaltung der Erfindung sind im Drehteller Stellgewinde vorgesehen, in welchen Gewindespindeln aufgenommen sind, die ein individuelles Anheben der Kreisausschnitte des Drehtellers gegenüber der Unterkonstruktion erlauben. Dies ist vorteilhaft, um den Drehteller oder Teile davon zu Montage-oder Reparaturzwecken über die Spindeln anheben zu können.

Das Antriebselement besteht in einer bevorzugten Ausführungsform aus mindestens einem auf der Unterseite des Drehtellers abrollenden, angetriebenen Reibrad, welches durch eine Andrückvorrichtung mit einstellbarer Kraft an den Drehteller gepresst wird. Es können hierbei ein oder mehrere in die Unterkonstruktion eingesetzte Antriebe (elektrisch, hydraulisch, pneumatisch etc.) mit kraft- oder formschlüssigem Antriebsrad vorgesehen sein, das durch ein Federelement in Form einer Andrückvorrichtung von unten an den Drehteller gepresst wird und auf einem zum Drehpunkt des Drehtellers konzentrischen Kreis tangential abrollt.

In einer Ausführungsform bestehen die Tragelemente aus mindestens zwei Tragrollen, wobei eine Tragrolle eine relativ weiche und die andere Tragrolle eine relativ harte Lauffläche aufweist, und die Lauffläche der weichen Tragrolle über die Lauffläche der harten Tragrolle hervorsteht.

Eine andere Ausführungsform sieht vor, dass die Tragelemente aus einer Tragrolle mit einer relativ harten Lauffläche besteht, wobei in der Lauffläche ein Gummiring geringerer Härte eingearbeitet ist, der über die Lauffläche hervorsteht.

Die Paarung von harten und weichen Laufflächen bzw. Laufrollen hat den Vorteil, dass durch die Verformung der weichen Rolle die harte Rolle erst bei größeren Auflagekräften zum tragen kommt. Dadurch läuft der Drehteller bei geringen Belastungen auf den weichen Tragrollen relativ leise.

Ferner wird durch das Abrollen der Tragrollen und des Antriebsrades an der Unterseite des Drehtellers die Gefahr von Verschmutzung und Blockieren durch Hindernisse reduziert, im Gegensatz zur umgekehrten Anordnung mit den Rollen am Drehteller. Das Abrollen und der Antrieb erfolgen auf einer hierfür geeigneten, ebenen Lauffläche des Drehtellers.
Die Tragrollen sind in die Unterkonstruktion eingesetzt, und rollen auf einem oder mehreren zum Drehpunkt des Drehtellers konzentrischen Kreisen tangential ab. Die Tragrollen werden über Stecklager ohne Schraubverbindung in der Unterkonstruktion fixiert.

Ferner weist die Unterkonstruktion Stellschrauben auf, durch die Unebenheiten der Stellfläche ausgeglichen werden können. Als Gewinde können z.B. Einschlagmuttern verwendet werden.

Im folgenden wird die Erfindung anhand eines Ausführungsbeispiels unter Bezugnahme auf mehrere Zeichnungen erläutert. Dabei gehen aus den Zeichnungen und Ihrer Beschreibung weitere Merkmale und Vorteile der Erfindung hervor.

### Es zeigen:

- Figur 1:: einen seitlichen Schnitt durch die erfindungsgemäße Drehscheibe;
- Figur 2:: eine Draufsicht auf die erfindungsgemäße Drehscheibe mit teilweise dargestelltem Drehteller;
- Figur 3:: einen Schnitt durch den Drehteller, bei welchem der sandwichartige Aufbau des Drehtellers mit Verbindungssystem erkennbar ist;
- Figur 4:: einen Schnitt durch die Drehscheibe im Bereich der Antriebsvorrichtung;
- Figur 5:: eine erste Ausführungsform eines Tragelementes mit unterschiedlich harten Tragrollen;
- Figur 6:: eine weitere Ausführungsform eines Tragelementes mit speziell ausgestalteter Tragrolle;
- Figur 7:: einen Schnitt durch die erfindungsgemäße Drehscheibe, ähnlich wie in Figur 1 mit einem angehobenen Kreisausschnitt;
- Figur 8:: eine Draufsicht auf die Anordnung gemäß Figur 7.

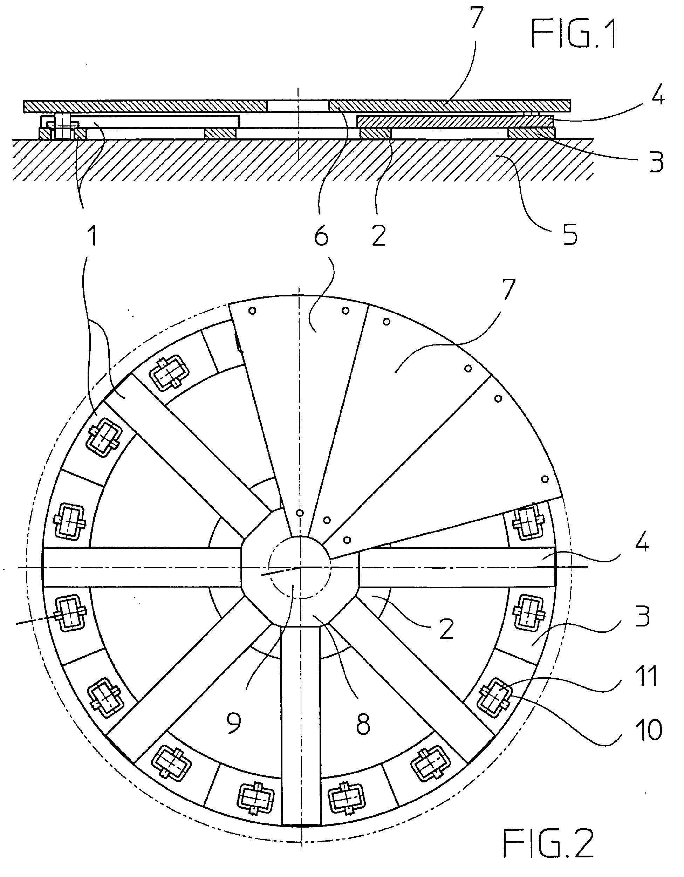

Die Figuren 1 und 2 zeigen den grundsätzlichen Aufbau der erfindungsgemäßen Drehscheibe. Die Drehscheibe umfasst im wesentlichen eine Unterkonstruktion 1, welche aus konzentrisch zueinander angeordneten Kreisringsegmenten 2, 3 besteht, welche über radial sich erstreckende Leisten 4 miteinander verbunden sind. Die Kreisringsegmente 2, 3 liegen dabei auf der Bodenfläche 5 auf.

Über der Unterkonstruktion 1 ist nun ein Drehteller 6 drehbar angeordnet, welcher im vorliegenden Ausführungsbeispiel aus einer Vielzahl von Kreisabschnitten 7 zusammengesetzt ist. Der Drehteller ist einerseits in seinem Zentrum mittels z.B. einer Kugeldrehverbindung 8 auf der Unterkonstruktion 1 gelagert und andererseits über Tragrollen 11, die verteilt auf der Unterkonstruktion in entsprechenden Ausnehmungen 10 angeordnet sind. Die Tragrollen 11 und die weiter unten beschriebenen Antriebselemente sind in der Unterkonstruktion versenkt und/oder verschachtelt angeordnet, so dass sich die Verlusthöhe im wesentlichen auf die Dicke des Drehtellers 6 reduziert.

Die zentrale Drehverbindung 8 sowie auch der Drehteller 6 weist eine zentrische Durchführung 9 auf, welche zur Durchführung von Strom sowie flüssigen oder gasförmigen Medien dient.

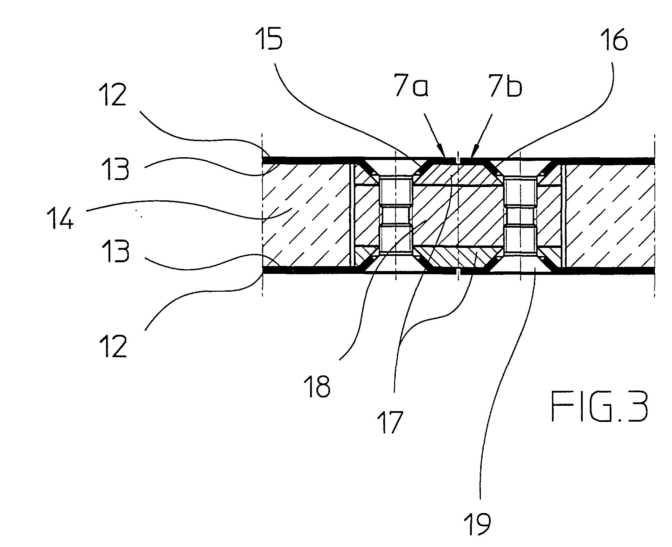

Figur 3 zeigt einen Schnitt durch den Drehteller 6, welcher aus einer im wesentlichen dreischichtigen Sandwichkonstruktion besteht.

Der Drehteller 6 umfasst eine Mittellage aus Holzwerkstoff 14, welche oben und unten jeweils mit einer Decklage aus Metallblech 12 oder karbon- oder glasfaserverstärktem Kunststoff durch verkleben und/oder verschrauben verbunden ist. Bevorzugt werden die Lagen über eine Klebeverbindung 13 miteinander verklebt.

Um zwei Kreisausschnitte 7a und 7b des Drehtellers 6 miteinander zu verbinden, ist ein spezielles Verbindungssystem vorgesehen. Dieses umfasst eine mittlere Gewindeleiste 18, welche oben und unten jeweils mit formschlüssigen Verbindungsleisten 17 abgedeckt ist. Am Rande der Sektoren 7a, 7b ist im Blechbelag 12 jeweils eine Senkung 15, 16 vorgesehen, in welche eine Senkschraube 19 eingreift und die Verbindungsleisten 17 fest mit der Gewindeleiste 18 verbindet. Dadurch entsteht zwischen den benachbarten Kreisausschnitten 7a und 7b eine stabile und biegesteife Verbindung.

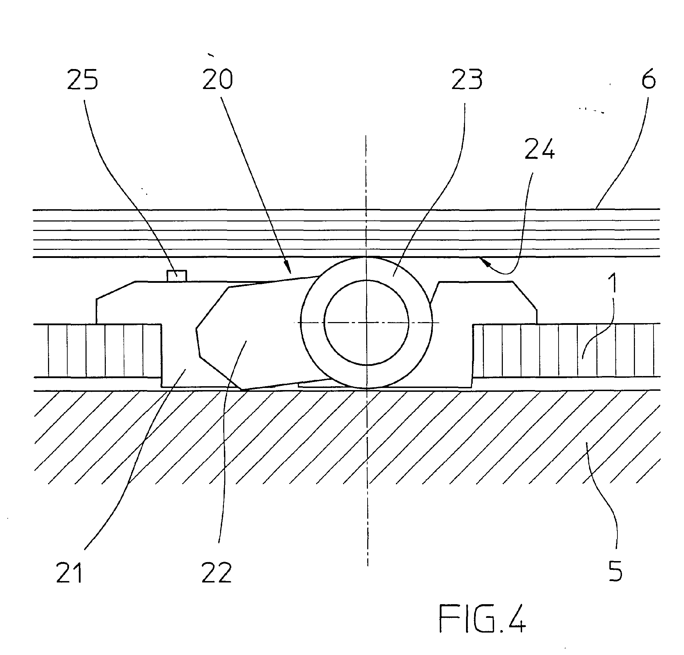

Figur 4 zeigt eine mögliche Ausgestaltung der Antriebseinheit für die Drehscheibe. Man erkennt wiederum die Bodenfläche 5, auf welcher die Unterkonstruktion 1 lagert, über welcher der Drehteller 6 angeordnet ist.

Die Unterkonstruktion weist eine Ausnehmung auf, in welcher die Halterung 21 für die Antriebseinheit angeordnet wird. An der Halterung 21 ist eine bewegliche Andrückvorrichtung 22 angeordnet, welche ein motorisch angetriebenes Reibrad 23 trägt, welches durch die Andrückvorrichtung an die Unterseite des Drehtellers 6 gepresst wird. Dazu weist der Drehteller 6 an seiner Unterseite eine entsprechende Lauffläche 24 auf. Mit einer Einstellschraube 25 kann die Andrückkraft des Reibrades eingestellt werden.

Es ist selbstverständlich, dass die Antriebsvorrichtung 20 sowohl elektromotorisch als auch hydraulisch oder pneumatisch arbeiten kann.

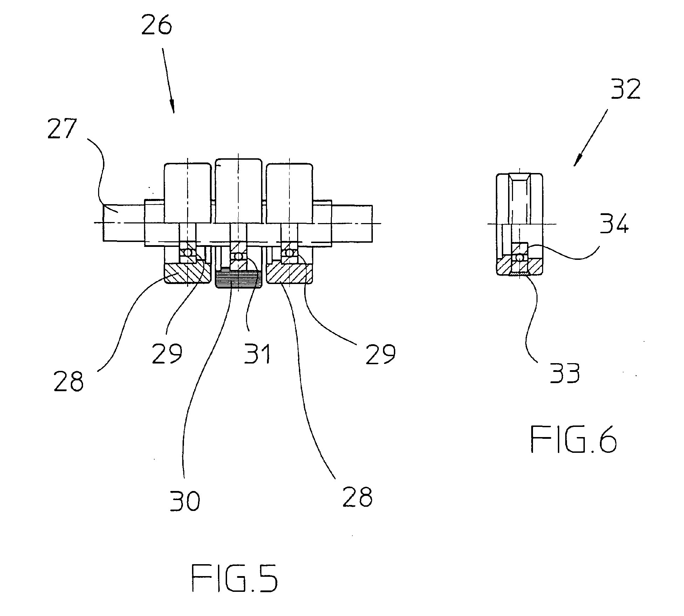

Die Figuren 5 und 6 zeigen zwei mögliche Ausbildungen der Tragelemente.

Figur 5 zeigt ein Tragelement bestehend aus drei Tragrollen 28, 30, welche auf einer gemeinsamen Achse 27 unabhängig voneinander drehbar über Kugellager 29, 31 oder dergleichen gelagert sind.
Die mittlere Rolle 30 weist einen relativ weichen Laufbelag auf und ist im Durchmesser etwas größer als die beiden äußeren Rollen 28, die mit einer härteren Lauffläche ausgestattet sind.

Oben auf die Laufrollen lagert der Drehteller 6, wobei bei geringer Belastung des Drehtellers 6 lediglich die Lauffläche der mittleren Rolle 30 mit der Unterseite des Drehtellers 6 in Berührung kommt. Bei größerer Belastung des Drehtellers 6 verformt sich die weiche Rolle 30 und der Drehteller 6 kommt nach und nach in Kontakt mit den Laufflächen der härteren Rollen 28. Dies hat den Vorteil, dass bei geringer Belastung auch geringe Laufgeräusche auftreten, da die weiche Rolle die Laufgeräusche gut dämpft.

Eine andere Ausführungsform zeigt Figur 6, wobei als Tragelement lediglich eine Rolle 32 verwendet wird, die zunächst mit einer relativ harten Lauffläche ausgestattet ist. Die Rolle 32 ist jedoch an ihrer Lauffläche mit einem relativ weichen Gummiring 33 oder dergleichen versehen, wobei bei geringer Belastung des Drehtellers 6 dieser lediglich mit dem Gummiring 33 in Kontakt kommt, der die Laufgeräusche mindert. Je größer die Belastung auf dem Drehteller 6 wird, desto wird stärker wird der Gummiring 33 zusammengepresst, so dass letztendlich die gesamte Lauffläche der Rolle 32 in Kontakt mit dem Drehteller 6 kommt.

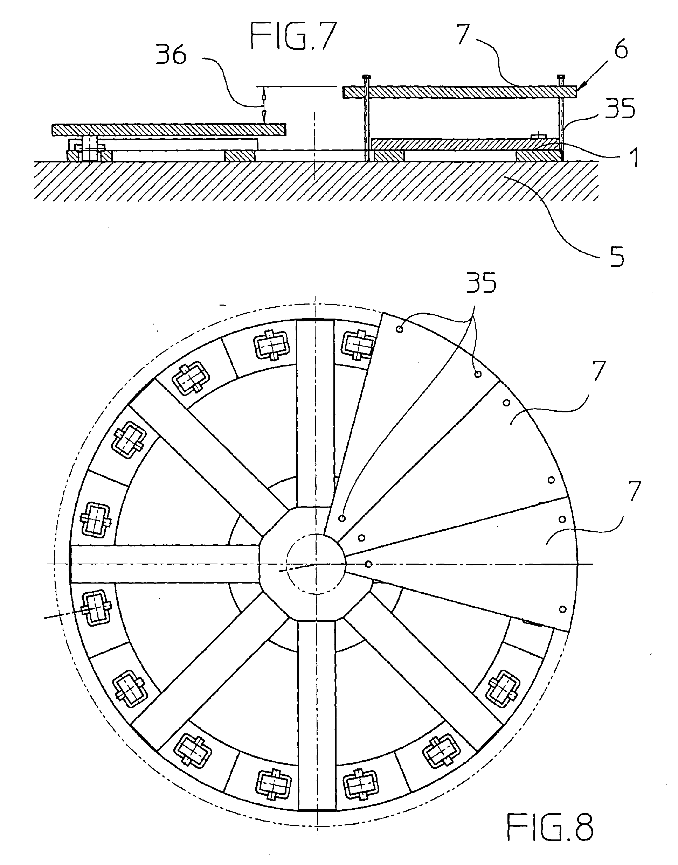

Schließlich zeigen die Figuren 7 und 8 eine ähnliche Konfiguration wie die Figuren 1 und 2, wobei jedoch zwischen dem Drehteller 6 und der Unterkonstruktion 1 Gewindespindeln 35 eingesetzt werden können, durch welche einzelne oder alle Sektoren des Drehtellers um eine gewisse Höhe 36 angehoben werden können, wie es insbesondere Figur 7 rechte Seite zeigt.

Dies hat den Vorteil, dass der Drehteller 6 oder Teile davon zu Montage- oder Wartungszwecken mittels den Gewindespindeln 35 angehoben werden können, so dass man leichten Zugriff auf die Trag- und Antriebselemente 11, 20 sowie die Unterkonstruktion 1 erhält.

### Zeichnungslegende

- 1: Unterkonstruktion
- 2: Kreisringsegment
- 3: Kreisringsegment
- 4: Leiste
- 5: Bodenfläche
- 6: Drehteller
- 7: Kreisausschnitt
- 8: Drehverbindung
- 9: Durchführung
- 10: Ausnehmung
- 11: Tragrolle
- 12: Blechbelag
- 13: Klebeverbindung
- 14: Holzwerkstoff
- 15: Senkung (Sektor 1)
- 16: Senkung (Sektor 2)
- 17: Verbindungsleiste
- 18: Gewindeleiste
- 19: Senkschraube
- 20: Antrieb
- 21: Halterung
- 22: Andrückvorrichtung
- 23: Reibrad
- 24: Lauffläche
- 25: Einstellschraube
- 26: Tragelement
- 27: Achse
- 28: Rolle
- 29: Lager
- 30: Rolle
- 31: Lager
- 32: Tragrolle
- 33: Gummiring
- 34: Lager
- 35: Gewindespindel
- 36: Hub

## Patentansprüche

1. Drehscheibe mit einer Unterkonstruktion und einem auf der Unterkonstruktion mittels Trag- und Antriebselementen drehbar gelagerten Drehteller,
**dadurch gekennzeichnet,**
dass der Drehteller (6) als mehrlagige, verformungssteife Sandwichkonstruktion ausgebildet ist,
und die Trag- und Antriebselemente (11, 20) versenkt und/oder verschachtelt in der Unterkonstruktion (1) aufgenommen sind.

2. Drehscheibe nach Anspruch 1, **dadurch gekennzeichnet**, dass die Unterkonstruktion (1) spinnennetzartig aufgebaut ist und konzentrisch angeordnete Kreisringsegmente (2,3) umfasst, die über radial verlaufende Leisten (4) miteinander verbunden sind.

3. Drehscheibe nach Anspruch 1 oder 2, **dadurch gekennzeichnet**, dass die Unterkonstruktion (1) Ausnehmungen (10) zur versenkten und/oder verschachtelten Aufnahme der Trag- und Antriebselemente (11,20) aufweist.

4. Drehscheibe nach einem der Ansprüche 1 bis 3, **dadurch gekennzeichnet**, dass die Trag- und Antriebselemente (11,20) über Stecklager in der Unterkonstruktion (1) fixierbar sind.

5. Drehscheibe nach einem der Ansprüche 1 bis 4, **dadurch gekennzeichnet**, dass der Drehteller (6) aus einzelnen Kreisausschnitten (7) zusammengesetzt ist.

6. Drehscheibe nach einem der Ansprüche 1 bis 5, **dadurch gekennzeichnet**, dass die Kreisausschnitte (7) durch ein lösbares Verbindungssystem fest miteinander verbunden sind, wobei jeweils zwei benachbarte Kreisausschnitte durch jeweils eine Gewindeleiste (18) und zwei mit der Gewindeleiste verbindbare Verbindungsleisten (17) formschlüssig und biegesteif miteinander verbunden sind.

7. Drehscheibe nach einem der Ansprüche 1 bis 6, **dadurch gekennzeichnet**, dass der Drehteller (6) im Zentrum über eine Kugeldrehverbindung (8) auf der Unterkonstruktion (1) gelagert ist.

8. Drehscheibe nach einem der Ansprüche 1 bis 7, **dadurch gekennzeichnet**, dass der Drehteller (6) im Bereich der Kugeldrehverbindung (8) eine zentrale Öffnung (9) zur Durchführung von Strom sowie flüssigen oder gasförmigen Medien aufweist.

9. Drehscheibe nach einem der Ansprüche 1 bis 8, **dadurch gekennzeichnet**, dass im Drehteller (6) Stellgewinde vorgesehen sind, in welchen Gewindespindeln (35) aufgenommen sind, die ein individuelles Anheben eines oder mehrerer Kreisausschnitte (7) des Drehtellers gegenüber der Unterkonstruktion (1) erlauben.

10. Drehscheibe nach einem der Ansprüche 1 bis 9, **dadurch gekennzeichnet**, dass das Antriebselement (20) aus mindestens einem auf die Unterseite des Drehtellers abrollenden, angetriebenen Reibrad (23) besteht, welches durch eine Andrückvorrichtung (22) mit einstellbarer Kraft an den Drehteller (6) gepresst wird.

11. Drehscheibe nach einem der Ansprüche 1 bis 10, **dadurch** gekennzeichnet, dass die Tragelemente (26) aus mindestens zwei Tragrollen (28, 30) besteht, wobei eine Tragrolle (30) eine relativ weiche und die andere Tragrolle (28) eine relativ harte Lauffläche aufweist, und die Lauffläche der weichen Tragrolle über die Lauffläche der harten Tragrolle hervorsteht.

12. Drehscheibe nach einem der Ansprüche 1 bis 10, **dadurch gekennzeichnet**, dass die Tragelemente aus einer Tragrolle (32) mit einer relativ harten Lauffläche besteht, wobei in der Lauffläche ein Gummiring (33) geringerer Härte eingearbeitet ist, der über die Lauffläche hervorsteht.
